# EUROPEAN PATENT SPECIFICATION

(11) **EP 4 479 271 B1**
(45) Date of publication and mention of the grant of the patent: **24.12.2025**
(21) Application number: 23721218.8
(22) Date of filing: 04.04.2023
(51) Int. Cl.: B60N 2/20, B60N 2/22, B60N 2/23

(54) **COMPACT LINEAR DAMPENER**
KOMPAKTER LINEARDÄMPFER
AMORTISSEUR LINÉAIRE COMPACT

(30) Priority: 04.04.2022 US 202263327019 P
(43) Date of publication of application: 25.12.2024
(73) Proprietor: Magna Seating Inc., Aurora, Ontario L4G 7K1 (CA)
(72) Inventor: RUNDE, David, M., Ortonville, MI 48462 (US)
(74) Representative: Witte, Weller und Partner Patentanwälte mbB Stuttgart
(86) International application number: PCT/US2023/065302
(87) International publication number: WO 2023/196796

(56) References cited:
- KR-B1- 101 241 027
- US-A1- 2017 113 802

## Description

### FIELD AND BACKGROUND OF THE INVENTION

The present invention relates to a seat assembly for use in an automotive vehicle. More particularly, the invention relates to a compact damper for use on an automotive seat assembly having a seat back pivotally coupled to a seat cushion wherein the seat is selectively movable between an upright seating position and a storage position.

### DESCRIPTION OF RELATED ART

Automotive vehicles typically include one or more seat assemblies having a seat cushion and a seat back for supporting a passenger above a vehicle floor. It is commonly known for certain seat assemblies to be pivotable between an upright seating position and a storage position, such as a pitched forward position or a stowed position. It is also commonly known for certain seat assemblies to include a seat back pivotable between the upright seating position and a folded position overlapping the seat cushion to provide additional storage space within the vehicle rear compartment.

The occupant may encounter difficulties repositioning the seat assembly between the upright seating position and the storage position due to the weight of the seat assembly. In addition, the occupant may encounter difficulties repositioning the seat back between the upright seating position and the folded position for a similar reason. Certain seat assemblies include a linear strut to help facilitate smooth operation of seat motion while controlling the occupant's effort to pivot the seat assembly. Exemplary known linear struts include gas filled struts, oil filled struts, and spring based struts. Typically, the linear struts require a longitudinal length greater than two times the dampening range to accommodate the strut compression into the gas, oil, or spring cylinder.

However, commonly known linear struts incorporated into seat assemblies are excessively long due to the space required to compress the linear strut for a selected dampening range.

It is desirable, therefore, to provide a linear dampener with a decreased packaging space in comparison with known linear struts used in seat assemblies.

US 2017/0113802 A1 discloses an aircraft passenger seat having a seat bottom frame supported by an eccentric cam. A rotatably supported seat back frame is provided with a damper mechanism. When the seat back frame is tilted forward from an upright position about the support point, a gas damper is compressed and prevents rapid tilting. This energy assists force for returning the seat back to the upright position. The eccentric cam rotates and lowers the seat bottom frame so as to prevent cushions from being collapsed.

KR 10-1241027 B1 discloses a device for adjusting the angle of rotation of a backrest of a seat of a motor vehicle, and to a rotary damper used therefor.

### SUMMARY OF THE INVENTION

According to one embodiment, there is provided a seat assembly for use in an automotive vehicle. The seat assembly comprises a fixed member and a rotating member pivotally coupled to the fixed member and pivotable between a first position and a second position. The seat assembly also comprises a linear dampener having a proximal end and a distal end fixedly coupled to the rotating member. The linear dampener includes a rotary dampener having a rotor shaft, a lead screw fixedly coupled to the rotor shaft and rotatably coupled to the distal end of the linear dampener, a nut meshingly engaged with the lead screw and configured to travel along the lead screw wherein the nut traveling along the lead screw causes the lead screw to rotate. The seat assembly also includes an activation link having an upper end pivotally coupled to the nut and a lower end pivotally coupled to the fixed member. Pivoting the rotating member between the first position and the second position causes the nut to travel along the lead screw causing the lead screw to rotate at a rotation speed and the rotary dampener dampens the rotation speed of the lead screw as the lead screw rotates to control movement of the rotating member relative to the fixed member.

According to another embodiment, there is provided a linear dampener for use in a seat assembly for an automotive vehicle, wherein the seat assembly comprises a rotating member pivotally coupled to a fixed member. The linear dampener comprises a housing having a passageway extending longitudinally therethrough between a proximal end and a distal end with the distal end of the housing configured to be fixedly coupled to the rotating member of the seat assembly. The linear dampener also comprises a rotary dampener fixedly coupled to the proximal end of the housing and configured to be fixedly coupled to the rotating member of the seat assembly wherein the rotary dampener includes a rotor shaft. The linear dampener also comprises a lead screw rotatably supported within the passageway in the housing and fixedly coupled to the rotor shaft such that the rotary dampener dampens the rotation speed of the lead screw. The linear dampener also comprises a nut configured to meshingly engage with the lead screw and travel along the lead screw causing the lead screw to rotate. The linear dampener also comprises an activation link having an upper end pivotally coupled to the nut and a lower end configured to be pivotally coupled to the fixed member of the seat assembly.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a side view of a seat assembly including a seat back pivotally coupled to a seat cushion and showing the seat back in an upright seating position, according to one embodiment of the present invention;
Figure 2 is a perspective view of a compact linear dampener of Figure 1, according to one embodiment of the present invention;
Figure 3 is a side view of the compact linear dampener of Figure 2;
Figure 4 is an exploded perspective view of the compact linear dampener of Figure 2;
Figure 5 is a cross-sectional view taken along line 5-5 of the compact linear dampener of Figure 2;
Figure 6 is a cross-sectional view taken along line 6-6 of the compact linear dampener of Figure 3;
Figure 7 is a side view of the seat assembly of Figure 1, showing the seat back rotated partially forward towards the seat cushion;
Figure 8 is a side view of the seat assembly of Figure 7, showing the seat back in a fold flat position overlapping the seat cushion;
Figure 9 is a side view of the seat assembly of Figure 8, showing the seat back rotated rearward towards the upright seating position;
Figure 10 is a perspective view of a lead screw of Figure 6, according to another embodiment of the present invention;
Figure 11 is a perspective view of the lead screw of Figure 6, according to another embodiment of the present invention; and
Figure 12 is a side view of a known gas strut.

### DETAILED DESCRIPTION OF THE INVENTION

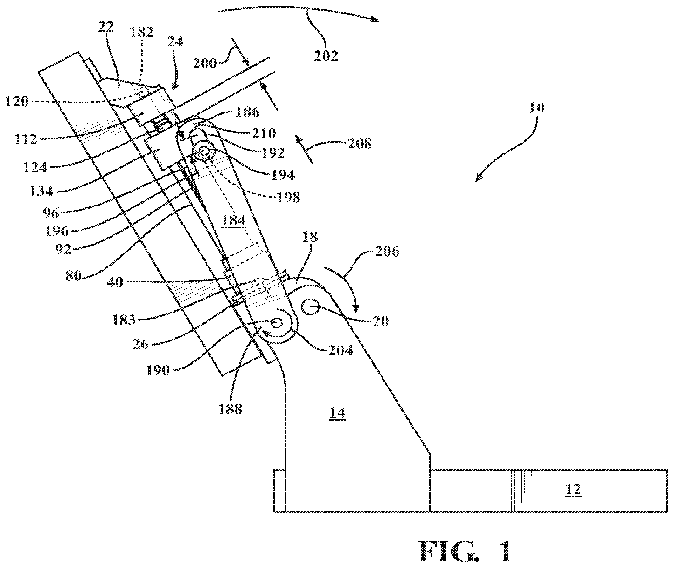

Figures 1-11 illustrate components of a seat assembly 10 for use in an automotive vehicle according to embodiments described herein. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

Depicted in Figure 1, the seat assembly 10 includes a seat cushion 12, a pair of laterally spaced apart seat brackets 14 fixedly coupled to the seat cushion 12, and a seat back 16 pivotally coupled to the seat brackets 14. The seat back 16 may pivot between an upright seating position, a plurality of reclined seating positions, and a fold flat position overlapping the seat cushion 12 as is commonly known in the art. The seat back 16 includes a pair of spaced apart lower brackets 18 fixedly coupled to a lower portion of the seat back 16 and pivotally coupled to the respective seat brackets 14 by respective front pivots 20. In addition, the seat back 16 includes an upper bracket 22 fixedly coupled to the seat back 16 and spaced apart from the lower brackets 18.

The seat assembly 10 also includes a compact linear dampener 24 (hereinafter, "linear dampener") operatively coupled between the seat back 16 and the seat bracket 14 while having proximal and distal ends fixedly coupled to the seat back 16. The linear dampener 24 facilitates smooth operation of the seat back 16 motion while controlling occupant efforts to pivot the seat back 16 between the upright seating position and the fold flat position, generically described as a first position and a second position. In the embodiment shown in Figure 1, the seat back 16 is a rotating member 16 and the seat bracket 14 is a fixed member 14. Thus, the proximal and distal ends of the linear dampener 24 are fixedly coupled to the rotating member 16 while the linear dampener 24 is operatively coupled between the rotating member 16 and the fixed member 14, as further described below. It will be appreciated that the rotating member 16 and the fixed member 14 may be other components within the seat assembly 10 without altering the scope of the present invention. For example, in an alternate embodiment, the distal and proximal ends of the linear dampener 24 may be fixedly coupled to the seat cushion 12 with the linear dampener 24 also operatively coupled between the seat cushion 12 and a fixed member such as a seat base (not shown). The linear dampener 24 operatively coupled between the seat cushion 12 and the seat base may assist with repositioning the seat assembly 10 between the upright seating position and a pitched forward position or other stowed position, without altering the scope of the present invention.

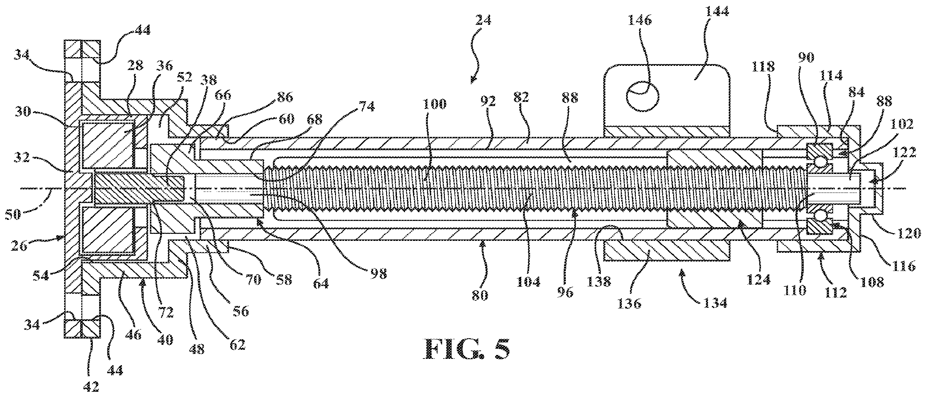

Referring to Figures 1-6, the linear dampener 24 includes a rotary dampener 26 allowing controlled deceleration of rotary movements as the seat back 16 (i.e., the rotating member) is pivoted relative to the seat brackets 14 (i.e., the fixed member). In the embodiment shown in Figure 5, the rotary dampener 26 includes an outer housing 28 having an intemal cavity 30 filled with a viscous fluid, such as oil. The outer housing 28 also includes a mounting plate 32 at a proximal end with spaced apart mounting holes 34 extending axially through the mounting plate 32. In addition, the rotary dampener 26 includes a rotor 36 spaced within the internal cavity 30 and fixedly coupled to a rotor shaft 38 extending axially through the outer housing 28. It will be appreciated that the rotary dampener 26 may include other types of rotary dampeners, such as continuous, non-continuous, and friction-based rotary dampeners, as non-limiting examples, without altering the scope of the present invention. In addition, the rotary dampener 26 may be configured to provide resistance in a clockwise direction (uni-directional), counterclockwise direction (uni-directional), or both directions (bi-directional) without altering the scope of the present invention. Typically, uni-directional rotary dampeners 26 dampen the rotation speed of the rotor shaft 38 in one rotational direction and freewheel in the opposing rotational direction.

Depicted in Figure 5, the linear dampener 24 also includes a housing coupler 40 fixedly coupled to the rotary dampener 26. The housing coupler 40 includes a mounting base 42 configured to be fixedly coupled to the mounting plate 32 of the rotary dampener 26. The housing coupler 40 also includes spaced apart holes 44 extending axially through the mounting base 42 configured to align with the mounting holes 34 in the mounting plate 32. In addition, the housing coupler 40 includes a lower wall 46 having a generally cylindrical shape projecting axially from the mounting base 42 and terminating at a ledge 48 extending radially inward from the lower wall 46. The lower wall 46 may define a longitudinal axis 50 of the housing coupler 40 and may also define a longitudinal axis 50 of the linear dampener 24. Further, the housing coupler 40 includes a lower cavity 52 surrounded radially by the lower wall 46 and a lower opening 54 in the mounting base 42 adjoining the lower cavity 52. The lower opening 54 and the lower cavity 52 are sized and shaped such that the outer housing 28 of the rotary dampener 26 extends through the lower opening 54 and into the lower cavity 52 with the rotor shaft 38 generally aligned with the longitudinal axis 50 when the mounting base 42 is assembled with the mounting plate 32. The housing coupler 40 also includes an upper wall 56 having a generally cylindrical shape projecting axially from the ledge 48 and terminating at an end surface 58. In addition, the housing coupler 40 includes an upper opening 60 in the end surface 58 aligned with the longitudinal axis 50 providing access to an upper cavity 62 surrounded radially by the upper wall 56 and adjoining the lower cavity 52.

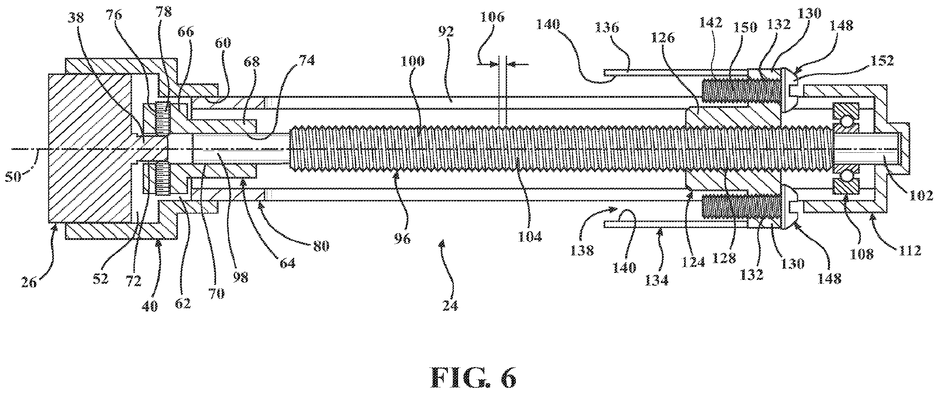

The linear dampener 24 also includes a dampener coupler 64 configured to be fixedly coupled to the rotor shaft 38. The dampener coupler 64 includes a base collar 66 adjoining end collar 68 and having a passageway 70 extending axially through the base collar 66 and the end collar 68 between a base opening 72 and an end opening 74. The base opening 72 and a portion of the passageway 70 adjacent the base opening 72 are sized and shaped such that a portion of the rotor shaft 38 may pass through the base opening 72 and into the passageway 70 with a longitudinal axis of the passageway 70 aligned with the longitudinal axis 50 of the rotary dampener 26. Depicted in Figure 6, the base collar 66 includes a base slot 76 extending radially therethrough and axially aligned with the rotor shaft 38 when assembled with the rotary dampener 26. In addition, the dampener coupler 64 includes a mechanical fastener 78 inserted into the base slot 76 fixedly coupling the rotor shaft 38 with the dampener coupler 64. It will be appreciated that a screw, a pin, a rivet, a welded connection, and the like may be used as the mechanical fastener 78 without altering the scope of the present invention.

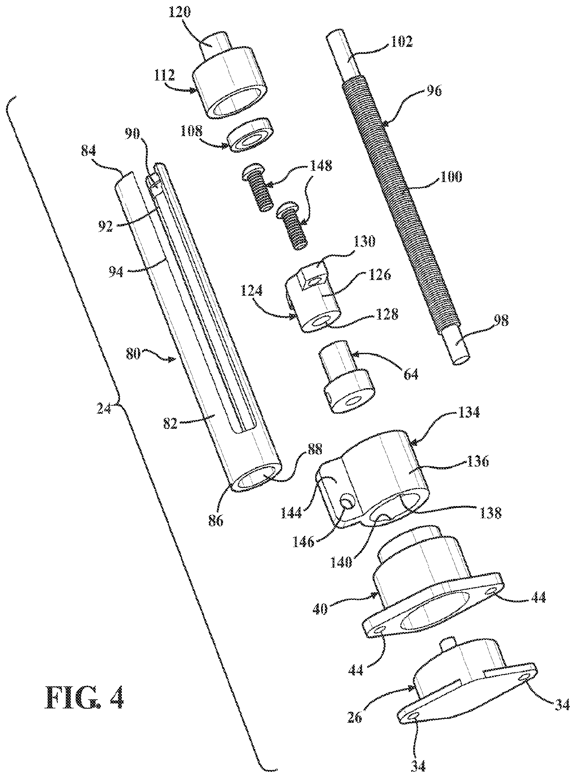

Referring to Figures 4 and 5, the linear dampener 24 also includes a housing 80 configured to be fixedly coupled to the housing coupler 40. The housing 80 includes a housing wall 82 having a generally tubular shape and extending in a longitudinal direction between opposing distal and proximal ends 84, 86 with a central passageway 88 extending longitudinally therethrough. The housing 80 also includes a recessed channel 90 extending circumferentially around an interior surface of the housing 80. In addition, the housing 80 includes opposing guide slots 92, 94 in the housing wall 82 extending longitudinally from the distal end 84. The proximal end 86 of the housing 80 is inserted into the upper opening 60 in the housing coupler 40 and fixedly coupled to the upper wall 56.

The linear dampener 24 also includes a lead screw 96 having a coupler shaft 98 at a proximal end configured to be inserted into the end opening 74 in the dampener coupler 64 and fixedly coupled to the end collar 68. The lead screw 96 includes a center section 100 extending in a longitudinal direction from the coupler shaft 98 and adjoining a bearing shaft 102 at a distal end. Referring to Figure 6, the center section 100 of the lead screw 96 includes a helical ridge extending circumferentially around an outer surface of the center section 100 forming a screw thread 104 having a uniform pitch 106 and extending between the proximal and distal ends of the center section 100.

Depicted in Figures 4 and 5, the linear dampener 24 also includes a radial bearing 108 configured to rotatably support the distal end of the lead screw 96 within the housing 80. In more detail, the radial bearing 108 is a ball bearing, a roller bearing, a sleeve bearing, or the like having a passageway 110 extending axially therethrough and having an outer circumferential surface configured to fit within a cavity defined by the recessed channel 90 in the housing 80. The radial bearing 108 is inserted into the recessed channel 90 in the housing 80 and the bearing shaft 102 is inserted into the passageway 110 in the radial bearing 108 during assembly.

Referring to Figures 1 and 5, the linear dampener 24 also includes an end cap 112 configured to be fixedly coupled to the distal end 84 of the housing 80 and fixedly coupled to the upper bracket 22. The end cap 112 includes a rim 114 having a general ring shape projecting from an end wall 116 that extends radially inward. The distal end of the rim 114 terminates at a cap opening 118. In addition, the end wall 116 includes an end boss 120 projecting axially from the end wall 116 away from the rim 114 and having a hole 122 extending axially therethrough. When assembled, the distal end 84 of the housing 80 is inserted into the cap opening 118 in the end cap 112 and the distal end of the lead screw 96 is aligned with the hole 122 extending through the end boss 120.

Referring to Figure 6, the linear dampener 24 also includes a nut 124 configured to travel longitudinally along the center section 100 of the lead screw 96 causing the lead screw 96 to rotate. The nut 124 includes a nut body 126 having a generally cylindrical shape with a threaded passageway 128 extending longitudinally therethrough and configured to meshingly engage with the screw thread 104 on the lead screw 96. The nut 124 also includes opposing tabs 130 projecting radially away from the nut body 126 and configured to extend through the respective guide slots 92, 94 in the housing 80 when the nut 124 is meshingly engaged with the lead screw 96. In addition, the tabs 130 include a respective fastener hole 132 extending axially therethrough.

Depicted in Figures 4-6, the linear dampener 24 also includes a link attachment 134 configured to be fixedly coupled to the nut 124. The link attachment 134 includes a ring 136 having a housing passageway 138 extending axially therethrough and configured to travel along an outer surface of the housing 80. The ring 136 includes opposing channels 140 extending axially along the housing passageway 138 and having an intemal thread 142. In addition, the link attachment 134 includes an attachment tab 144 projecting radially from the outer surface of the ring 136 and having an attachment hole 146 extending laterally therethrough. As shown in Figure 6, the distal end of the ring 136 is configured to frictionally engage a proximal surface of the tabs 130 on the nut 124.

Referring to Figure 6, the linear dampener 24 also includes a pair of mechanical fasteners 148 configured to fixedly couple the nut 124 to the link attachment 134. The mechanical fasteners 148 include a threaded shaft 150 extending from a bolt head 152. The threaded shafts 150 are inserted into the respective fastener holes 132 in the nut 124, into respective channels 140 in the link attachment 134, and meshingly engaged with the intemal thread 142 in the channels 140. The link attachment 134 may be fixedly coupled to the nut 124 using rivets, pins, bolts, or a welded connection without altering the scope of the present invention.

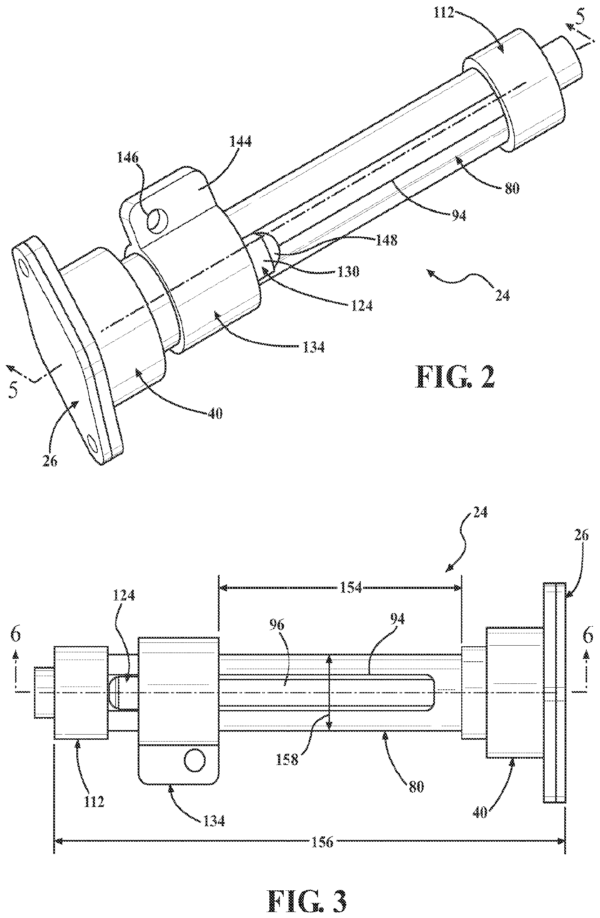

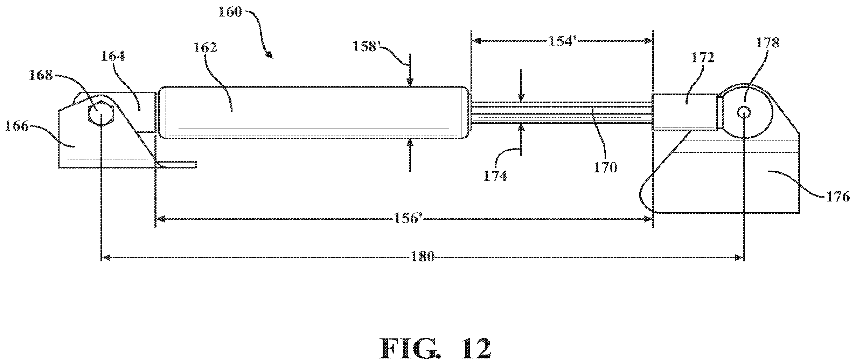

Figure 3 shows a linear dampener 24 according to one embodiment of the present invention. Referring to Figure 3, the linear dampener 24 is configured to have a stroke length 154 of about 60 mm, an extended length 156 of about 126.5 mm, and a housing 80 having an outer diameter 158 of about 17.25 mm. In comparison, a traditional known gas strut 160 having a common size of 8-19-60 with a stroke length 154' of about 60 mm is shown in Figure 12. The known gas strut 160 includes a gas cylinder 162 having a distal end fixedly coupled to a cylinder bracket 164 which is pivotally coupled to a lower flange 166 via a cylinder pivot 168. In addition, the gas cylinder 162 has an outer diameter 158' of about 19 mm. The known gas strut 160 also includes a rod 170 operatively coupled to the gas cylinder 162 at one end and fixedly coupled to an end fitting 172 at an opposing end, as is commonly known in the art. The rod 170 has an outer diameter 174 of about 8 mm. The end fitting 172 is pivotally coupled to a rod bracket 176 via a rod pivot 178. Further, the known gas strut 160 has an extended length 156' (not including the cylinder bracket 164 and the end fitting 172) of about 165 mm. In addition, the known gas strut 160 has an overall length 180 between the cylinder pivot 168 and the rod pivot 178 of about 214 mm. The linear dampener 24 according to the present invention has a smaller packaging size than the known gas strut 160 having a similar stroke length 154, 154'. Further, comparing the linear dampener 24 of Figure 3 with the known gas strut 160 of Figure 12, the linear dampener 24 is approximately 87.5 mm shorter than the known gas strut 160.

Depicted in Figure 1, the distal and proximal end of the linear dampener 24 are fixedly coupled to the seat back 16 (i.e., the rotating member) by inserting the end boss 120 into an aperture 182 in the upper bracket 22 and fastening with a mechanical fastener (not shown). Next, the proximal end of the linear dampener 24 is fixedly coupled to the lower bracket 18 by inserting additional mechanical fasteners 183 through the holes 44 in the housing coupler 40, through the mounting holes 34 in the mounting plate 32, and into holes (not shown) in the lower bracket 18.

Shown in Figure 1, the seat assembly 10 also includes an activation link 184 having an upper end 186 pivotally coupled to the link attachment 134 and a lower end 188 pivotally coupled to the seat bracket 14 (i.e., the fixed member) via a lower pivot 190 that is offset from the front pivot 20. In more detail, the activation link 184 also includes a link slot 192 near the upper end 186 for pivotally coupling the activation link 184 to the link attachment 134. The seat assembly 10 also includes a pin 194 slidably coupled to the link slot 192 and fixedly coupled to the attachment hole 146 in the link attachment 134. In one embodiment, the link slot 192 is a lost motion slot 192 extending in a longitudinal direction of the activation link 184 to allow non-dampened rotation for a limited travel range. The longitudinal distance that the pin 194 may travel along the lost motion slot 192 defines a lost motion distance 196. It will be appreciated that the activation link 184 may include a cable (not shown) operatively coupled between the pin 194 and the lower pivot 190 without altering the scope of the present invention.

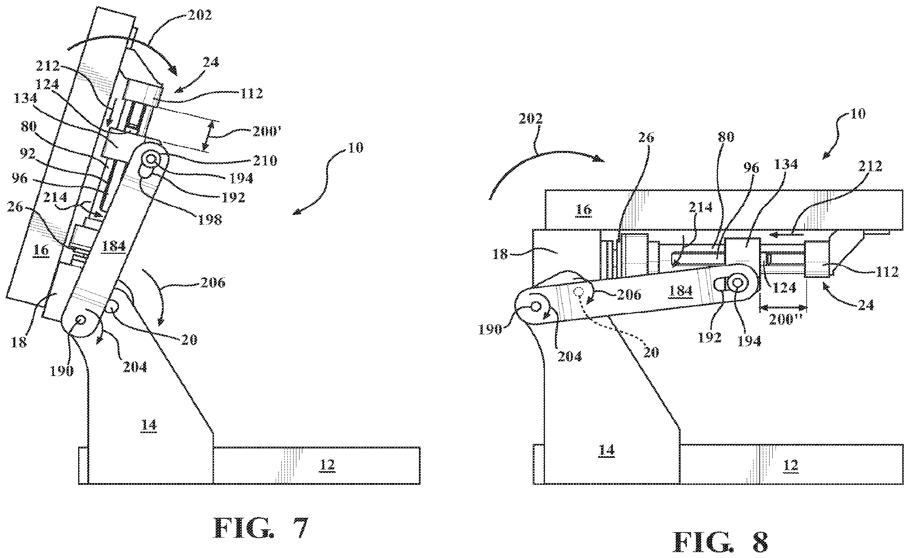

The seat assembly 10 can be repositioned upon demand by the occupant between an upright seating position (Figure 1) and the fold flat position (Figure 8) by pivoting the seat back 16 relative to the seat cushion 12. Further, the seat assembly 10 can be repositioned upon demand by the occupant from the fold flat position (Figure 8) to the upright seating position (Figure 1). Referring to Figure 1, the seat back 16 (i.e., the rotating member) is initially in the upright seating position with the proximal and distal ends of the linear dampener 24 fixedly coupled to the lower and upper brackets 18, 22, respectively, which in turn are fixedly coupled to the seat back 16. In addition, the lower bracket 18 is pivotally coupled to the seat bracket 14 (i.e., the fixed member) via the front pivot 20 with the seat bracket 14 fixedly coupled to the seat cushion 12. The activation link 184 is pivotally coupled to the link attachment 134 by the pin 194 extending through the link slot 192. The pin 194 is shown in a disengaged position near a proximal end 198 of the link slot 192 with the link slot 192 having a lost motion distance 196 defined by a distance the pin 194 may travel along the link slot 192. The distal end of the link attachment 134 is spaced apart from the proximal end of the end cap 112 by a design distance 200.

Referring to Figure 1, to move the seat assembly 10 from the upright seating position to the fold flat position, the occupant pivots the seat back 16 in a forward direction (arrow 202) towards the seat cushion 12 until the seat back 16 is rotated past vertical. The forward rotation (arrow 202) of the seat back 16 causes the activation link 184 to rotate in a clockwise direction (arrow 204) about the lower pivot 190 and causes the lower bracket 18 to rotate in a clockwise direction (arrow 206) about the front pivot 20, as viewed in Figure 1. The lost motion distance 196 within the link slot 192 allows the seat back 16 to rotate forward beyond vertical prior to the engagement of the linear dampener 24. In more detail, the initial forward rotation (arrow 202) of the seat back 16 causes the pin 194 to slide upward along the link slot 192 (arrow 208) towards a distal end 210 of the link slot 192, defining an engaged position for the pin 194. Referring to Figure 7, the linear dampener 24 engages when the pin 194 frictionally engages the distal end 210 of the link slot 192 as the seat back 16 is rotated forward (arrow 202). Additional forward rotation (arrow 202) of the seat back 16 after the pin 194 is in the engaged position with the distal end 210 of the link slot 192 causes the nut 124 to travel downward (arrow 212) along the lead screw 96 causing the lead screw 96 to rotate in a first rotational direction 214 at a rotation speed. The rotary dampener 26 dampens the rotation speed of the lead screw 96 as the lead screw 96 rotates in the first rotational direction 214. In addition, the activation link 184 and the lower bracket 18 continue to rotate in the forward direction (arrows 204, 206) about the lower pivot 190 and the front pivot 20, respectively, as the seat back 16 rotates in the forward direction (arrow 202). In Figure 7, the link attachment 134 has been displaced a distance 200' from the end cap 112 along the housing 80 by movement of the nut 124 with the distance 200' having a larger magnitude than the design distance 200.

After the seat back 16 is rotated forward (arrow 202) past vertical, gravity rotates the seat back 16 towards the fold flat position. The seat back 16 rotates forward until the seat back 16 overlays the seat cushion 12, as shown in Figure 8. The rotary dampener 26 continues to dampen the rotation speed of the lead screw 96 in the first rotational direction 214 as the nut 124 travels downward along the lead screw 96. The link attachment 134 is displaced away from the end cap 112 a distance 200" greater than the design distance 200 when the seat back 16 is in the fold flat position. The distance 200" is equal to the stroke length 154 of the linear dampener 26.

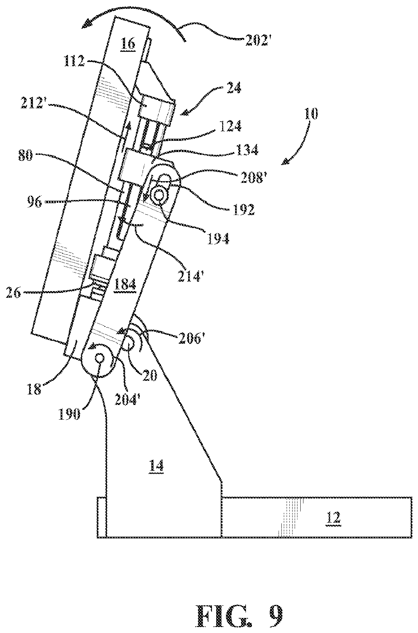

Depicted in Figure 9, to return the seat assembly 10 to the upright seating position from the fold flat position, the occupant pivots the seat back 16 rearwards (arrow 202') about the front pivot 20 (arrow 206') which also causes the activation link 184 to rotate rearwards (arrow 204') about the lower pivot 190. As the seat back 16 pivots rearward (arrow 202'), the nut 124 travels upward (arrow 212') along the lead screw 96, causing the lead screw 96 to rotate in a second rotational direction 214' different than the first rotational direction 214. As the seat back 16 is pivoted rearward (arrow 202') and approaches the upright seating position, the pin 194 is repositioned downward (arrow 208') along the link slot 192 disengaging the linear dampener 24.

In one embodiment, the rotary dampener 26 is a bi-directional rotary dampener that dampens the rotation speed of the lead screw 96 in both the clockwise and counterclockwise rotational directions (214, 214'). The bi-directional rotary dampener 26 dampens the rotation speed of the lead screw 96 as the nut 124 travels upward (arrow 212') along the lead screw 96 causing the lead screw 96 to rotate in the second rotational direction 214'.

In an alternate embodiment, the rotary dampener 26 is a uni-directional rotary dampener (i.e., dampens in one of the clockwise or counterclockwise rotational directions 214, 214' and freewheels in the other rotational direction 214, 214'). The uni-directional rotary dampener 26 may have a minimal effect on the return effort to pivot the seat back 16 upward (arrow 202') and a minimal dampening effect on the rotation speed of the lead screw 96 as the nut 124 travels upward (arrow 212') along the lead screw 96 causing the lead screw 96 to rotate in the second rotational direction 214'.

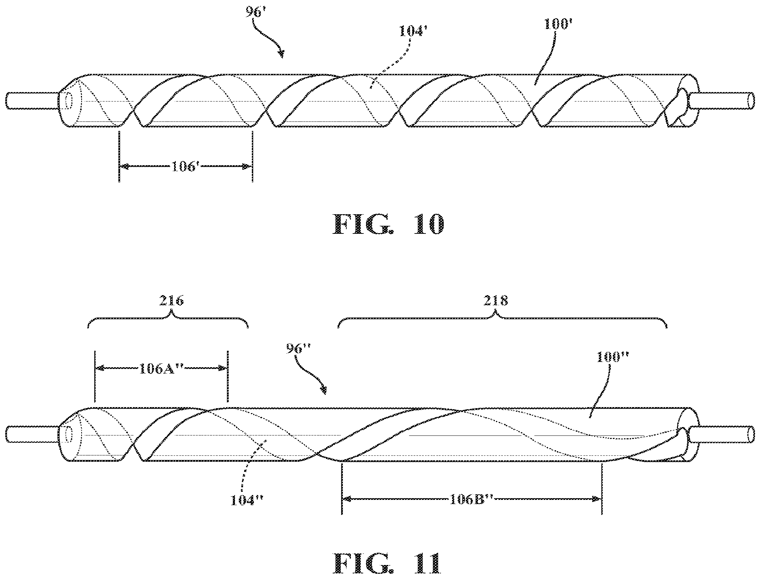

A second embodiment of the lead screw 96' is shown in Figure 10, where like primed reference numerals represent similar elements as those described above. The second embodiment shown in Figure 10 depicts a lead screw 96' in place of the lead screw 96 shown in Figure 6. Only significant differences between the two embodiments are reflected in the Figures and the description below. The lead screw 96' includes a helical groove 104' extending circumferentially around an outer surface of the center section 100' with the helical groove 104' having a uniform pitch 106' between the proximal and distal ends of the center section 100'.

A third embodiment of the lead screw 96" is shown in Figure 11, where like double primed reference numerals represent similar elements as those described above. The third embodiment shown in Figure 11 depicts a lead screw 96" in place of the lead screw 96 shown in Figure 6. Only significant differences between the two embodiments are reflected in the Figures and the description below. The lead screw 96" includes a helical groove 104" extending circumferentially around an outer surface of the center section 100" with the helical groove 104" having a variable pitch 106A", 106B" between the distal and proximal ends of the center section 100". As a non-limiting example, the center section 100" includes a first portion 216 having a first pitch 106A" and a second portion 218 spaced apart from the first portion 216 and having a second pitch 106B" different from the first pitch 106A". The first pitch 106A" may be a larger pitch or a smaller pitch than the second pitch 106B" without altering the scope of the present invention. In addition, the pitch 106A", 106B" may gradually increase or decrease along the center section 100" between the first and second portions 216, 218 without altering the scope of the present invention. The linear dampener 24 may apply varying force through the range of travel when the lead screw 96" includes a varying pitch 106A", 106B". The rotational speed of the lead screw 96" as the nut 124 travels along the lead screw 96" is related to the pitch 106A", 106B", with a smaller pitch 106A" causing the lead screw 96" to rotate faster than the rotation speed of the larger pitch 106B".

As discussed above, the seat assembly 10 of the present invention includes a compact linear dampener 24 having distal and proximal ends fixedly coupled to the seat back 16 with the compact linear dampener 24 operationally coupled to the seat bracket 14 by the activation link 184. The compact linear dampener 24 includes a rotary dampener 26 configured to dampen the rotation speed of a lead screw 96. In addition, the compact linear dampener 24 includes a nut 124 configured to travel along the lead screw 96 causing the lead screw 96 to rotate as the seat back 16 is rotated between an upright seating position and a fold flat position.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A seat assembly (10) for use in an automotive vehicle, the seat assembly (10) comprising:
a fixed member (14);
a rotating member (16) pivotally coupled to the fixed member (14) and pivotable between a first position and a second position;
a linear dampener (24) having a proximal end and a distal end fixedly coupled to the rotating member (16), the linear dampener (24) including a rotary dampener (26) having a rotor shaft (38), a lead screw (96) fixedly coupled to the rotor shaft (38) and rotatably coupled to the distal end of the linear dampener (24), a nut (124) meshingly engaged with the lead screw (96) and configured to travel along the lead screw (96) wherein the nut (124) traveling along the lead screw (96) causes the lead screw (96) to rotate; and
an activation link (184) having an upper end (186) pivotally coupled to the nut (124) and a lower end (188) pivotally coupled to the fixed member (14);
wherein pivoting the rotating member (16) between the first position and the second position causes the nut (124) to travel along the lead screw (96) causing the lead screw (96) to rotate at a rotation speed; and
wherein the rotary dampener (26) dampens the rotation speed of the lead screw (96) as the lead screw (96) rotates to control movement of the rotating member (16) relative to the fixed member (14).

2. The seat assembly (10) as set forth in claim 1, wherein:
the rotating member (16) is pivotally coupled to the fixed member (14) by a front pivot (20); and
the lower end (188) of the activation link (184) is pivotally coupled to the fixed member (14) at a lower pivot (190) spaced apart from the front pivot (20).

3. The seat assembly (10) as set forth in claim 2, the linear dampener (24) further comprises a pin (194) fixedly coupled to the nut (124) and slidably coupled to a link slot (192) in the activation link (184), the link slot (192) including an engaged position spaced apart from a disengaged position;
wherein the linear dampener (24) is engaged when the pin (194) is in the engaged position and the linear dampener (24) is disengaged when the pin (194) is spaced apart from the engaged position; and
wherein the pin (194) is spaced apart from the engaged position when the rotating member (16) is in the first position and pivoting the rotating member (16) from the first position towards the second position repositions the pin (194) to the engaged position engaging the linear dampener (24).

4. The seat assembly (10) as set forth in claim 2, wherein:
the rotary dampener (26) is a uni-directional rotary dampener (26) configured to dampen the rotation speed of the lead screw (96) in a first rotational direction and freewheel in a second rotational direction different than the first rotational direction;
or
the rotary dampener (26) is a bi-directional rotary dampener (26) configured to dampen the rotation speed of the lead screw (96) in a first rotational direction and in a second rotational direction different from the first rotational direction.

5. The seat assembly (10) as set forth in claim 2, wherein:
the rotating member (16) is a seat back (16), the fixed member (14) is a seat bracket (14) fixedly coupled to a seat cushion (12), the first position is an upright seating position, and the second position is a fold flat position with the seat back (16) pivoted over the seat cushion (12).

6. The seat assembly (10) as set forth in claim 2, wherein:
the activation link (184) includes a cable operatively coupled between the nut (124) and the fixed member (14).

7. The seat assembly (10) as set forth in claim 2, wherein:
the lead screw (96) includes a screw thread (104) or a helical groove (104') having a uniform pitch; and
the nut (124) is meshingly engaged with the screw thread (104) or the helical groove (104');
or
the lead screw (96) includes a helical groove (104') having a variable pitch (106"); and
the nut (124) is meshingly engaged with the helical groove (104').

8. A linear dampener (24) for use in a seat assembly (10) for an automotive vehicle, the seat assembly (10) comprising a rotating member (16) pivotally coupled to a fixed member (14), the linear dampener (24) comprising:
a housing (80) having a passageway (88) extending longitudinally therethrough between a proximal end (86) and a distal end (84), the distal end (84) of the housing (80) configured to be fixedly coupled to the rotating member (16) of the seat assembly (10);
a rotary dampener (26) fixedly coupled to the proximal end (86) of the housing (80) and configured to be fixedly coupled to the rotating member (16) of the seat assembly (10), the rotary dampener (26) including a rotor shaft (38);
a lead screw (96) rotatably supported within the passageway (88) in the housing (80) and fixedly coupled to the rotor shaft (38) such that the rotary dampener (26) dampens the rotation speed of the lead screw (96);
a nut (124) configured to meshingly engage with the lead screw (96) and travel along the lead screw (96) causing the lead screw (96) to rotate: and
an activation link (184) having an upper end (186) pivotally coupled to the nut (124) and a lower end (188) configured to be pivotally coupled to the fixed member (14) of the seat assembly (10).

9. The linear dampener (24) as set forth in claim 8, wherein:
the rotary dampener (26) is a uni-directional rotary dampener (26) configured to dampen the rotation speed of the lead screw (96) in a first rotational direction and freewheel in a second rotational direction different from the first rotational direction;
or
the rotary dampener (26) is a bi-directional rotary dampener (26) configured to dampen the rotation speed of the lead screw (96) in a first rotational direction and a second rotational direction different from the first rotational direction.

10. The linear dampener (24) as set forth in claim 8, wherein:
the center section (100) of the lead screw (96) includes a screw thread (104) or a helical groove (104') having a uniform pitch; and
the nut (124) is meshingly engaged with the screw thread (104) or the helical groove (104').

11. The linear dampener (24) as set forth in claim 8, wherein:
the center section (100) of the lead screw (96) includes a helical groove (104') having a variable pitch (106''); and
the nut (124) is meshingly engaged with the helical groove (104').

12. The linear dampener (24) as set forth in claim 8, further comprising a pin (194) fixedly coupled to the nut (124), wherein:
the activation link (184) further includes a link slot (192) having an engaged position spaced apart from a disengaged position with the pin (194) extending through the link slot (192) and repositionable between the engaged position and the disengaged position; and
the linear dampener (24) is engaged when the pin (194) is in the engaged position and the linear dampener (24) is disengaged while the pin (194) is spaced apart from the engaged position.

13. The linear dampener (24) as set forth in claim 8, wherein:
the fixed member (14) is a seat bracket (14) fixedly coupled to a seat cushion (12) of the seat assembly (10), the rotating member (16) is a seat back (16) of the seat assembly (10) pivotally coupled to the seat bracket (14) and pivotable between a first position and a second position;
pivoting the seat back (16) between the first position and the second position causes the nut (124) to travel along the lead screw (96) causing the lead screw (96) to rotate and causing the rotary dampener (26) to dampen the rotation speed of the lead screw (96).

14. The linear dampener (24) as set forth in claim 13, wherein:
the seat back (16) is pivotally coupled to the seat bracket (14) at a front pivot (20),
the activation link (184) is configured to be pivotally coupled to the seat bracket (14) at a lower pivot (190) spaced apart from the front pivot (20).

15. The linear dampener (24) as set forth in claim 8, wherein:
the activation link (184) includes a cable configured to be operatively coupled between the nut (124) and fixed member (14).

## Patentansprüche

1. Sitzanordnung (10) zur Verwendung in einem Kraftfahrzeug, die Sitzanordnung (10) umfassend:
ein festes Bauteil (14);
ein rotierendes Bauteil (16), das mit dem festen Bauteil (14) drehbar gekoppelt ist und zwischen einer ersten Position und einer zweiten Position gedreht werden kann;
einen linearen Dämpfer (24), der ein proximales und ein distales Ende aufweist, die mit dem rotierenden Bauteil (16) fest gekoppelt sind, wobei der lineare Dämpfer (24) einen Rotationsdämpfer (26), der eine Rotorwelle (38) einschließt, eine Leitspindel (96), die mit der Rotorwelle (38) fest gekoppelt ist und mit dem distalen Ende des linearen Dämpfers (24) rotierend gekoppelt ist, eine Mutter (124), die mit der Leitspindel (96) kämmend eingerastet und konfiguriert ist, um sich entlang der Leitspindel (96) zu bewegen, einschließt, wobei die Mutter (124), die sich entlang der Leitspindel (96) bewegt, bewirkt, dass die Leitspindel (96) rotiert; und
eine Betätigungsverbindung (184), die ein oberes Ende (186), das mit der Mutter (124) drehbar gekoppelt ist, und ein unteres Ende (188), das mit dem festen Bauteil (14) drehbar gekoppelt ist, aufweist;
wobei das Drehen des rotierenden Bauteils (16) zwischen der ersten Position und der zweiten Position bewirkt, dass sich die Mutter (124) entlang der Leitspindel (96) bewegt, was bewirkt, dass die Leitspindel (96) mit einer Rotationsgeschwindigkeit rotiert; und
wobei der Rotationsdämpfer (26) die Rotationsgeschwindigkeit der Leitspindel (96) dämpft, wenn die Leitspindel (96) rotiert, um eine Bewegung des rotierenden Bauteils (16) relativ zu dem festen Bauteil (14) zu steuern.

2. Sitzanordnung (10) nach Anspruch 1, wobei:
das rotierende Bauteil (16) durch einen vorderen Drehpunkt (20) mit dem festen Bauteil (14) drehbar gekoppelt ist; und
das untere Ende (188) der Betätigungsverbindung (184) an einem unteren Drehpunkt (190), der von dem vorderen Drehpunkt (20) beabstandet ist, mit dem festen Bauteil (14) drehbar gekoppelt ist.

3. Sitzanordnung (10) nach Anspruch 2, wobei der lineare Dämpfer (24) ferner einen Stift (194) umfasst, der mit der Mutter (124) fest gekoppelt ist und mit einem Verbindungsschlitz (192) in der Betätigungsverbindung (184) verschiebbar gekoppelt ist, wobei der Verbindungsschlitz (192) eine eingerastete Position einschließt, die von einer gelösten Position beabstandet ist;
wobei der lineare Dämpfer (24) eingerastet ist, wenn der Stift (194) in der eingerasteten Position ist, und der lineare Dämpfer (24) gelöst ist, wenn der Stift (194) von der eingerasteten Position beabstandet ist; und
wobei der Stift (194) von der eingerasteten Position beabstandet ist, wenn das rotierende Bauteil (16) in der ersten Position ist, und das Drehen des rotierenden Bauteils (16) von der ersten Position zu der zweiten Position hin den Stift (194) in die eingerastete Position repositioniert, die mit dem linearen Dämpfer (24) einrastet.

4. Sitzanordnung (10) nach Anspruch 2, wobei:
der Rotationsdämpfer (26) ein unidirektionaler Rotationsdämpfer (26) ist, der konfiguriert ist, um die Rotationsgeschwindigkeit der Leitspindel (96) in einer ersten Rotationsrichtung zu dämpfen und in einer zweiten Rotationsrichtung, die von der ersten Rotationsrichtung unterschiedlich ist, freizulaufen;
oder
der Rotationsdämpfer (26) ein bidirektionaler Rotationsdämpfer (26) ist, der konfiguriert ist, um die Rotationsgeschwindigkeit der Leitspindel (96) in einer ersten Rotationsrichtung und in einer zweiten Rotationsrichtung, die sich von der ersten Rotationsrichtung unterscheidet, zu dämpfen.

5. Sitzanordnung (10) nach Anspruch 2, wobei:
das rotierende Bauteil (16) eine Sitzlehne (16) ist, das feste Bauteil (14) eine Sitzhalterung (14) ist, die mit einem Sitzpolster (12) fest gekoppelt ist, die erste Position eine aufrechte Sitzposition ist und die zweite Position eine flach zusammengeklappte Position ist, bei der die Sitzlehne (16) über das Sitzpolster (12) gedreht ist.

6. Sitzanordnung (10) nach Anspruch 2, wobei:
die Betätigungsverbindung (184) ein Kabel einschließt, das zwischen der Mutter (124) und dem festen Bauteil (14) wirkgekoppelt ist.

7. Sitzanordnung (10) nach Anspruch 2, wobei:
die Leitspindel (96) ein Schraubengewinde (104) oder eine spiralförmige Nut (104'), die eine gleichmäßige Steigung aufweist, einschließt; und
die Mutter (124) mit dem Schraubengewinde (104) oder der spiralförmigen Nut (104') kämmend eingerastet ist;
oder
die Leitspindel (96) eine spiralförmige Nut (104'), die eine variable Steigung (106") aufweist, einschließt; und
die Mutter (124) mit der spiralförmigen Nut (104') kämmend eingerastet ist.

8. Linearer Dämpfer (24) zur Verwendung in einer Sitzanordnung (10) für ein Kraftfahrzeug, die Sitzanordnung (10) umfassend ein rotierendes Bauteil (16), das mit einem festen Bauteil (14) drehbar gekoppelt ist, der lineare Dämpfer (24) umfassend:
ein Gehäuse (80), das einen Durchgang (88) aufweist, der sich in Längsrichtung zwischen einem proximalen Ende (86) und einem distalen Ende (84) hindurch erstreckt, wobei das distale Ende (84) des Gehäuses (80) konfiguriert ist, um mit dem rotierenden Bauteil (16) der Sitzanordnung (10) fest gekoppelt zu sein;
einen Rotationsdämpfer (26), der mit dem proximalen Ende (86) des Gehäuses (80) fest gekoppelt ist und konfiguriert ist, um mit dem rotierenden Bauteil (16) der Sitzanordnung (10) fest gekoppelt zu sein, wobei der Rotationsdämpfer (26) eine Rotorwelle (38) einschließt;
eine Leitspindel (96), die innerhalb des Durchgangs (88) in dem Gehäuse (80) rotierend gelagert und mit der Rotorwelle (38) fest gekoppelt ist, derart, dass der Rotationsdämpfer (26) die Rotationsgeschwindigkeit der Leitspindel (96) dämpft;
eine Mutter (124), die konfiguriert ist, um mit der Leitspindel (96) kämmend einzurasten und sich entlang der Leitspindel (96) zu bewegen, was bewirkt, dass die Leitspindel (96) rotiert; und
eine Betätigungsverbindung (184), die ein oberes Ende (186), das mit der Mutter (124) drehbar gekoppelt ist, und ein unteres Ende (188), das konfiguriert ist, um mit dem festen Bauteil (14) der Sitzanordnung (10) drehbar gekoppelt zu sein, aufweist.

9. Linearer Dämpfer (24) nach Anspruch 8, wobei:
der Rotationsdämpfer (26) ein unidirektionaler Rotationsdämpfer (26) ist, der konfiguriert ist, um die Rotationsgeschwindigkeit der Leitspindel (96) in einer ersten Rotationsrichtung zu dämpfen und in einer zweiten Rotationsrichtung, die sich von der ersten Rotationsrichtung unterscheidet, freizulaufen;
oder
der Rotationsdämpfer (26) ein bidirektionaler Rotationsdämpfer (26) ist, der konfiguriert ist, um die Rotationsgeschwindigkeit der Leitspindel (96) in einer ersten Rotationsrichtung und einer zweiten Rotationsrichtung, die sich von der ersten Rotationsrichtung unterscheidet, zu dämpfen.

10. Linearer Dämpfer (24) nach Anspruch 8, wobei:
der Mittelabschnitt (100) der Leitspindel (96) ein Schraubengewinde (104) oder eine spiralförmige Nut (104'), das/die eine gleichmäßige Steigung aufweist, einschließt; und
die Mutter (124) mit dem Schraubengewinde (104) oder der spiralförmigen Nut (104') kämmend einrastet.

11. Linearer Dämpfer (24) nach Anspruch 8, wobei:
der Mittelabschnitt (100) der Leitspindel (96) eine spiralförmige Nut (104'), die eine variable Steigung (106") aufweist, einschließt; und
die Mutter (124) mit der spiralförmigen Nut (104') kämmend eingerastet ist.

12. Linearer Dämpfer (24) nach Anspruch 8, ferner umfassend einen Stift (194), der mit der Mutter (124) fest gekoppelt ist, wobei:
die Betätigungsverbindung (184) ferner einen Verbindungsschlitz (192) einschließt, der eine eingerastete Position aufweist, die von einer gelösten Position beabstandet ist, wobei sich der Stift (194) durch den Verbindungsschlitz (192) erstreckt und zwischen der eingerasteten Position und der gelösten Position repositioniert werden kann; und
der lineare Dämpfer (24) eingerastet ist, wenn der Stift (194) in der eingerasteten Position ist, und der lineare Dämpfer (24) gelöst ist, während der Stift (194) von der eingerasteten Position beabstandet ist.

13. Linearer Dämpfer (24) nach Anspruch 8, wobei:
das feste Bauteil (14) eine Sitzhalterung (14) ist, die mit einem Sitzpolster (12) der Sitzanordnung (10) fest gekoppelt ist; das rotierende Bauteil (16) eine Sitzlehne (16) der Sitzanordnung (10) ist, die mit der Sitzhalterung (14) drehbar gekoppelt ist und zwischen einer ersten Position und einer zweiten Position drehbar ist;
das Drehen der Sitzlehne (16) zwischen der ersten und der zweiten Position bewirkt, dass sich die Mutter (124) entlang der Leitspindel (96) bewegt, was bewirkt, dass die Leitspindel (96) rotiert und bewirkt, dass der Rotationsdämpfer (26) die Rotationsgeschwindigkeit der Leitspindel (96) dämpft.

14. Linearer Dämpfer (24) nach Anspruch 13, wobei:
die Sitzlehne (16) an einem vorderen Drehpunkt (20) mit der Sitzhalterung (14) drehbar gekoppelt ist,
die Betätigungsverbindung (184) konfiguriert ist, um an einem unteren Drehpunkt (190), der von dem vorderen Drehpunkt (20) beabstandet ist, mit der Sitzhalterung (14) drehbar gekoppelt zu sein.

15. Linearer Dämpfer (24) nach Anspruch 8, wobei:
die Betätigungsverbindung (184) ein Kabel einschließt, das konfiguriert ist, um zwischen der Mutter (124) und dem festen Bauteil (14) wirkgekoppelt zu werden.

## Revendications

1. Assemblage de siège (10) destiné à être utilisé dans un véhicule automobile, l'assemblage de siège (10) comprenant :
un élément fixe (14) ;
un élément rotatif (16) couplé de manière pivotante à l'élément fixe (14) et pouvant pivoter entre une première position et une seconde position ;
un amortisseur linéaire (24) ayant une extrémité proximale et une extrémité distale couplées de manière fixe à l'élément rotatif (16), l'amortisseur linéaire (24) incluant un amortisseur rotatif (26) ayant un arbre de rotor (38), une vis sans fin (96) couplée de manière fixe à l'arbre de rotor (38) et couplée en rotation à l'extrémité distale de l'amortisseur linéaire (24), un écrou (124) engagé par engrènement avec la vis sans fin (96) et configuré pour se déplacer le long de la vis sans fin (96), l'écrou (124) se déplaçant le long de la vis sans fin (96) amenant la vis sans fin (96) à entrer en rotation ; et
une tringle d'activation (184) ayant une extrémité supérieure (186) couplée de manière pivotante à l'écrou (124) et une extrémité inférieure (188) couplée de manière pivotante à l'élément fixe (14) ;
dans lequel un pivotement de l'élément rotatif (16) entre la première position et la seconde position amène l'écrou (124) à se déplacer le long de la vis sans fin (96), amenant la vis sans fin (96) à entrer en rotation à une vitesse de rotation ; et
dans lequel l'amortisseur rotatif (26) amortit la vitesse de rotation de la vis sans fin (96) lorsque la vis sans fin (96) entre en rotation pour commander un déplacement de l'élément rotatif (16) relativement à l'élément fixe (14).

2. Assemblage de siège (10) selon la revendication 1, dans lequel :
l'élément rotatif (16) est couplé de manière pivotante à l'élément fixe (14) par l'intermédiaire d'un pivot avant (20) ; et
l'extrémité inférieure (188) de la tringle d'activation (184) est couplée de manière pivotante à l'élément fixe (14) au niveau d'un pivot inférieur (190) à distance du pivot avant (20).

3. Assemblage de siège (10) selon la revendication 2, l'amortisseur linéaire (24) comprenant en outre une broche (194) couplée de manière fixe à l'écrou (124) et couplée de manière coulissante à une fente de tringle (192) dans la tringle d'activation (184), la fente de tringle (192) incluant une position engagée à distance d'une position désengagée ;
dans lequel l'amortisseur linéaire (24) est engagé quand la broche (194) est dans la position engagée et l'amortisseur linéaire (24) est désengagé quand la broche (194) est à distance de la position engagée ; et
dans lequel la broche (194) est à distance de la position engagée quand l'élément rotatif (16) est dans la première position et un pivotement de l'élément rotatif (16) depuis la première position vers la seconde position repositionne la broche (194) jusqu'à la position engagée engageant l'amortisseur linéaire (24).

4. Assemblage de siège (10) selon la revendication 2, dans lequel :
l'amortisseur rotatif (26) est un amortisseur rotatif unidirectionnel (26) configuré pour amortir la vitesse de rotation de la vis sans fin (96) dans une première direction de rotation et tourner librement dans une seconde direction de rotation différente de la première direction de rotation ;
ou
l'amortisseur rotatif (26) est un amortisseur rotatif bidirectionnel (26) configuré pour amortir la vitesse de rotation de la vis sans fin (96) dans une première direction de rotation et dans une seconde direction de rotation différente de la première direction de rotation.

5. Assemblage de siège (10) selon la revendication 2, dans lequel :
l'élément rotatif (16) est un dossier de siège (16), l'élément fixe (14) est un support de siège (14) couplé de manière fixe à un coussin de siège (12), la première position est une position d'assise à la verticale, et la seconde position est une position repliée à plat, le dossier de siège (16) étant pivoté au-dessus du coussin de siège (12).

6. Assemblage de siège (10) selon la revendication 2, dans lequel :
la tringle d'activation (184) inclut un câble couplé de manière fonctionnelle entre l'écrou (124) et l'élément fixe (14).

7. Assemblage de siège (10) selon la revendication 2, dans lequel :
la vis sans fin (96) inclut un filetage (104) ou une rainure hélicoïdale (104') ayant un pas uniforme ; et
l'écrou (124) est engagé par engrènement avec le filetage (104) ou la rainure hélicoïdale (104') ;
ou
la vis sans fin (96) inclut une rainure hélicoïdale (104') ayant un pas variable (106") ; et
l'écrou (124) est engagé par engrènement avec la rainure hélicoïdale (104').

8. Amortisseur linéaire (24) destiné à être utilisé dans un assemblage de siège (10) pour un véhicule automobile, l'assemblage de siège (10) comprenant un élément rotatif (16) couplé de manière pivotante à un élément fixe (14), l'amortisseur linéaire (24) comprenant :
un boîtier (80) ayant une voie de passage (88) s'étendant longitudinalement à travers celui-ci entre une extrémité proximale (86) et une extrémité distale (84), l'extrémité distale (84) du boîtier (80) étant configurée pour être couplée de manière fixe à l'élément rotatif (16) de l'assemblage de siège (10) ;
un amortisseur rotatif (26) couplé de manière fixe à l'extrémité proximale (86) du boîtier (80) et configuré pour être couplé de manière fixe à l'élément rotatif (16) de l'assemblage de siège (10), l'amortisseur rotatif (26) incluant un arbre de rotor (38) ;
une vis sans fin (96) supportée en rotation à l'intérieur de la voie de passage (88) dans le boîtier (80) et couplée de manière fixe à l'arbre de rotor (38) de telle sorte que l'amortisseur rotatif (26) amortit la vitesse de rotation de la vis sans fin (96) ;
un écrou (124) configuré pour s'engager par engrènement avec la vis sans fin (96) et se déplacer le long de la vis sans fin (96), amenant la vis sans fin (96) à entrer en rotation ; et
une tringle d'activation (184) ayant une extrémité supérieure (186) couplée de manière pivotante à l'écrou (124) et une extrémité inférieure (188) configurée pour être couplée de manière pivotante à l'élément fixe (14) de l'assemblage de siège (10).

9. Amortisseur linéaire (24) selon la revendication 8, dans lequel :
l'amortisseur rotatif (26) est un amortisseur rotatif unidirectionnel (26) configuré pour amortir la vitesse de rotation de la vis sans fin (96) dans une première direction de rotation et tourner librement dans une seconde direction de rotation différente de la première direction de rotation ;
ou
l'amortisseur rotatif (26) est un amortisseur rotatif bidirectionnel (26) configuré pour amortir la vitesse de rotation de la vis sans fin (96) dans une première direction de rotation et dans une seconde direction de rotation différente de la première direction de rotation.

10. Amortisseur linéaire (24) selon la revendication 8 dans lequel :
la section centrale (100) de la vis sans fin (96) inclut un filetage (104) ou une rainure hélicoïdale (104') ayant un pas uniforme ; et
l'écrou (124) est engagé par engrènement avec le filetage (104) ou la rainure hélicoïdale (104').

11. Amortisseur linéaire (24) selon la revendication 8, dans lequel :
la section centrale (100) de la vis sans fin (96) inclut une rainure hélicoïdale (104') ayant un pas variable (106") ; et
l'écrou (124) est engagé par engrènement avec la rainure hélicoïdale (104').

12. Amortisseur linéaire (24) selon la revendication 8, comprenant en outre une broche (194) couplée de manière fixe à l'écrou (124), dans lequel :
la tringle d'activation (184) inclut en outre une fente de tringle (192) ayant une position engagée à distance d'une position désengagée, la broche (194) s'étendant à travers la fente de tringle (192) et pouvant être repositionnée entre la position engagée et la position désengagée ; et
l'amortisseur linéaire (24) est engagé quand la broche (194) est dans la position engagée et l'amortisseur linéaire (24) est désengagé quand la broche (194) est à distance de la position engagée.

13. Amortisseur linéaire (24) selon la revendication 8, dans lequel :
l'élément fixe (14) est un support de siège (14) couplé de manière fixe à un coussin de siège (12) de l'assemblage de siège (10), l'élément rotatif (16) est un dossier de siège (16) de l'assemblage de siège (10) couplé de manière pivotante au support de siège (14) et pouvant être pivoté entre une première position et une seconde position ;
un pivotement du dossier de siège (16) entre la première position et la seconde position amène l'écrou (124) à se déplacer le long de la vis sans fin (96), amenant la vis sans fin (96) à entrer en rotation, et amenant l'amortisseur rotatif (26) à amortir la vitesse de rotation de la vis sans fin (96).

14. Amortisseur linéaire (24) selon la revendication 13, dans lequel :
le dossier de siège (16) est couplé de manière pivotante au support de siège (14) au niveau d'un pivot avant (20),
la tringle d'activation (184) est configurée pour être couplée de manière pivotante au support de siège (14) au niveau d'un pivot inférieur (190) à distance du pivot avant (20).

15. Amortisseur linéaire (24) selon la revendication 8, dans lequel :
la tringle d'activation (184) inclut un câble configuré pour être couplé de manière fonctionnelle entre l'écrou (124) et l'élément fixe (14).
